(19) Europäisches Patentamt
European Patent Office
Office européen des brevets

(11) EP 3 868 814 A1

(12) # EUROPEAN PATENT APPLICATION
published in accordance with Art. 153(4) EPC

(43) Date of publication:
**25.08.2021 Bulletin 2021/34**

(21) Application number: **19873859.3**

(22) Date of filing: **16.10.2019**

(51) Int Cl.:
***C08J 5/22*** (2006.01) ***C08L 27/12*** (2006.01)
***C25B 13/08*** (2006.01) ***H01B 1/06*** (2006.01)
***H01M 8/1023*** (2016.01) ***H01M 8/1039*** (2016.01)
***H01M 8/1067*** (2016.01) ***H01M 8/18*** (2006.01)

(86) International application number:
**PCT/JP2019/040724**

(87) International publication number:
**WO 2020/080427 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.10.2018 JP 2018197566**

(71) Applicant: **AGC INC.**
**Chiyoda-ku,**
**Tokyo 1008405 (JP)**

(72) Inventors:
- **SUMIKURA, Kosuke**
  **Tokyo 100-8405 (JP)**
- **HAYABE, Shintaro**
  **Tokyo 100-8405 (JP)**
- **MIYAJIMA, Tatsuya**
  **Tokyo 100-8405 (JP)**
- **NISHIO, Takuo**
  **Tokyo 100-8405 (JP)**

(74) Representative: **Müller-Boré & Partner Patentanwälte PartG mbB**
**Friedenheimer Brücke 21**
**80639 München (DE)**

(54) **ION-EXCHANGE MEMBRANE AND REDOX FLOW CELL**

(57) To provide an ion-exchange membrane that, when being used in a redox flow battery, provides excellent current efficiency and can suppress reduction in voltage efficiency. The ion-exchange membrane contains a fluorinated polymer having sulfonic acid-type functional groups and is characterized in that the difference (D - Dc) between the distance D between ion clusters measured by the small angle X-ray scattering method, and the diameter Dc of an ion cluster is larger than 0 and at most 0.50 nm.

Fig. 1

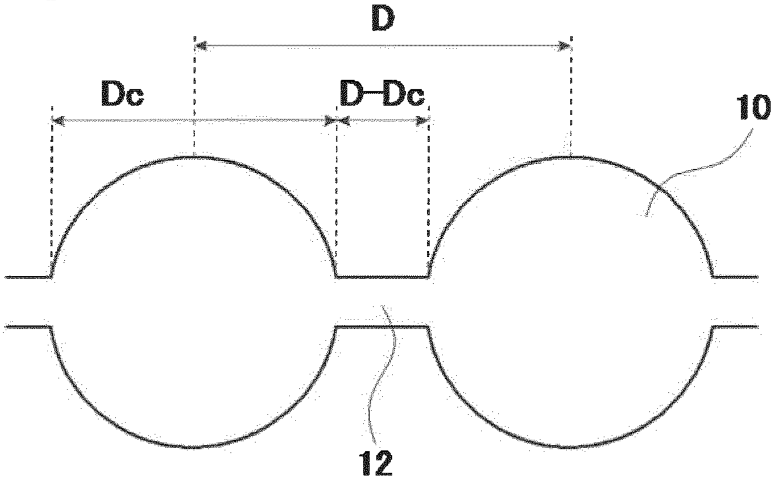


EP 3 868 814 A1

## Description

TECHNICAL FIELD

The present invention relates to an ion exchange membrane and a redox flow battery.

BACKGROUND ART

In recent years, secondary batteries capable of storing and discharging electricity have been attracting attention, and among them, a redox flow battery has been attracting attention. The redox flow battery can be used, for example, as a system for storing surplus electrodes by generating natural energy such as wind power generation and solar power generation. Patent Document 1 discloses a redox flow battery in which a positive electrode and a negative electrode are separated by an ion exchange membrane (paragraph 0063, etc.).

PRIOR ART DOCUMENT

PATENT DOCUMENT

Patent Document 1: JP-A-2015-097219

DISCLOSURE OF INVENTION

TECHNICAL PROBLEM

In recent years, in order to improve the performance of a redox flow battery, the performance required for an ion exchange membrane is increasing. Specifically, an ion exchange membrane whereby the power efficiency becomes high at the time of charging and discharging the redox flow battery is desirable. In order to increase the power efficiency, it is necessary to improve at least one of voltage efficiency and current efficiency. In the past, there was such a relation that when it was attempted to increase the current efficiency, the voltage efficiency tended to be substantially reduced.
In view of the above circumstance, it is an object of the present invention to provide an ion exchange membrane which is excellent in current efficiency and can suppress a decrease in voltage efficiency at the time when applied to a redox flow battery.
Further, it is another object of the present invention to provide a redox flow battery.

SOLUTION TO PROBLEM

As a result of diligent studies on the above problem, the present inventors have found that the desired effect can be obtained by adjusting the difference (D - Dc) between the distance D between ion clusters of the ion exchange membrane and the diameter Dc of an ion cluster, and have arrived at the present invention.
That is, the present inventors have found that the above problem can be solved by the following constructions.
[1] An ion exchange membrane containing a fluorinated polymer having sulfonic acid type functional groups, characterized in that the difference (D - Dc) between the distance D between ion clusters measured by the small-angle X-ray scattering method and the diameter Dc of an ion cluster, is larger than 0 and at most 0.50 nm.
[2] The ion exchange membrane according to [1], wherein D - Dc is larger than 0 and at most 0.40 nm.
[3] The ion exchange membrane according to [1] or [2], wherein the membrane thickness of the ion exchange membrane is from 30 to 100 μm.
[4] The ion exchange membrane according to any one of [1] to [3], wherein the fluorinated polymer contains units based on a fluorinated olefin and units based on a monomer having a sulfonic acid type functional group and a fluorine atom.
[5] The ion exchange membrane according to [4], wherein the fluorinated olefin is a $C_{2-3}$ fluoroolefin having at least one fluorine atom in the molecule.
[6] The ion exchange membrane according to [4], wherein the units based on the monomer having a sulfonic acid type functional group and a fluorine atom are units represented by the formula (1):

Formula (1) $-[CF_2-CF(-L-(SO_3M)n)]-$

wherein L is an n+1-valent perfluorohydrocarbon group which may contain an oxygen atom, M is a hydrogen atom, an alkali metal or a quaternary ammonium cation, and n is 1 or 2.
[7] The ion exchange membrane according to [6], wherein the units represented by the formula (1) are units represented by the formula (1-4):

Formula (1-4) $-[CF_2-CF(-(CF_2)_x-(OCF_2CFY)_y-O-(CF_2)_z-SO_3M)]-$

wherein M is a hydrogen atom, an alkali metal or a quaternary ammonium cation, x is 0 or 1, y is an integer of from 0 to 2, z is an integer of from 1 to 4, and Y is F or $CF_3$.
[8] The ion exchange membrane according to any one of [1] to [7], which further contains a reinforcing material.
[9] The ion exchange membrane according to any one of [1] to [8], which is used for a redox flow battery.
[10] The ion exchange membrane according to any one of [1] to [9], wherein the ion exchange capacity of the fluorinated polymer is at least 0.95 milliequivalent/gram dry resin.
[11] The ion exchange membrane according to any one of [1] to [10], which is used for a redox flow battery, of which the current density is at least 120 $mA/cm^2$ during charging/discharging.
[12] A redox flow battery comprising a positive electrode, a negative electrode, an electrolytic solution, and an ion exchange membrane as defined in any one of [1] to [11].

## ADVANTAGEOUS EFFECTS OF INVENTION

According to the present invention, it is possible to provide an ion exchange membrane which is excellent in current efficiency and can suppress a decrease in voltage efficiency at the time when applied to a redox flow battery. In particular, it is possible to provide an ion exchange membrane, whereby at the time when applied to a redox flow battery having a high current density during charging/discharging (a redox flow battery of which the current density during charging/discharging is at least 120 $mA/cm^2$), the current efficiency is excellent and it is possible to suppress the decrease in voltage efficiency.
Further, according to the present invention, it is possible to provide a redox flow battery.

## BRIEF DESCRIPTION OF DRAWING

Fig. 1 is a diagram for explaining the distance D between ion clusters and the diameter Dc of an ion cluster.

## DESCRIPTION OF EMBODIMENTS

The meanings of the following terms in the present specification are as follows.
An "ion exchange group" is a group in which at least some of ions contained in this group may be exchanged with other ions, and the following sulfonic acid type functional group or the like may, for example, be mentioned.
A "sulfonic acid type functional group" means a sulfonic acid group ($-SO_3H$) or a sulfonate group ($-SO_3M^2$, where $M^2$ is an alkali metal or a quaternary ammonium cation).
A "precursor membrane" is a membrane containing a polymer having groups convertible to ion exchange groups.
The "groups convertible to ion-exchange groups" means groups that can be converted to ion-exchange groups by a treatment such as a hydrolysis treatment or an acidification treatment.
The "groups convertible to sulfonic acid type functional groups" means groups that can be converted to sulfonic acid type functional groups by a treatment such as a hydrolysis treatment or an acidification treatment.
A "perfluorohydrocarbon group" means a hydrocarbon group in which all hydrogen atoms are substituted by fluorine atoms.
A "perfluoroaliphatic hydrocarbon group" means an aliphatic hydrocarbon group in which all hydrogen atoms are substituted by fluorine atoms.
A "unit" in a polymer means an atomic group derived from one molecule of a monomer, which is formed by polymerization of the monomer. The unit may be an atomic group directly formed by the polymerization reaction, or may be an atomic group in which a part of the atomic group is converted to another structure by treating the polymer obtained by the polymerization reaction.
A "reinforcing material" means a member to be used to improve the strength of an ion exchange membrane. As the reinforcing material, a material derived from a reinforcing cloth is preferred.
A "reinforcing cloth" means a cloth to be used as a raw material for a reinforcing material for improving the strength of an ion exchange membrane.

A "reinforcing thread" is a thread constituting the reinforcing cloth, and is a thread that does not elute in the operating environment of a battery containing the ion exchange membrane. As the "reinforcing thread", a thread made of a material that does not elute even when the reinforcing cloth is immersed in an alkaline aqueous solution (for example, an aqueous solution of sodium hydroxide having a concentration of 32 mass%) is preferred.

A "sacrificial thread" is a thread constituting the reinforcing cloth, and a thread, of which at least a part is eluted in the operating environment of the battery containing the ion exchange membrane. As the "sacrificial thread", a thread made of a material that elutes in an alkaline aqueous solution at the time when the reinforcing cloth is immersed in the alkaline aqueous solution is preferred.

A numerical range represented by using " to " means a range including the numerical values before and after" to " as the lower limit value and the upper limit value.

[Ion exchange membrane]

The ion exchange membrane of the present invention is an ion exchange membrane containing a fluorinated polymer having sulfonic acid type functional groups (hereinafter referred to also as a "fluorinated polymer (S)"), wherein the difference (D - Dc) between the distance D between ion clusters measured by the small-angle X-ray scattering method and the diameter Dc of an ion cluster, is larger than 0 and at most 0.50 nm, preferably larger than 0 and at most 0.40 nm, more preferably larger than 0 and at most 0.30 nm.

A redox flow battery using the ion exchange membrane of the present invention is excellent in current efficiency and it is possible to suppress a decrease in voltage efficiency. The reason for this is considered to be as follows.

In a case where the ion exchange membrane of the present invention is made of a fluorinated polymer (S), the ion exchange membrane of the present invention will have a structure wherein hydrophobic portions forming fluorinated hydrocarbon portions constituting the skeleton of the fluorinated polymer (S) and sulfonic acid type functional groups being ion exchange groups are microscopically separated, and as a result, a plurality of sulfonic acid type functional groups are gathered, and water molecules coordinated around the groups are gathered to form an ion cluster.

That is, an ion cluster of the ion exchange membrane of the present invention is considered to be one composed of portions in which hydrophobic portions forming fluorinated hydrocarbon portions forming the skeleton of the fluoropolymer (S) and a plurality of sulfonic acid type functional groups being ion exchange groups, are gathered, and water molecules coordinated around them.

More specifically, in the ion exchange membrane of the present invention, as shown in Fig. 1, two large-sized ion clusters 10 and a small-sized ion channel 12 connecting between them are formed. As a result, ion channels are continuously transmitted in the thickness direction of the membrane, and they function as an ion (particularly proton $H^+$) conduction passage (channel).

Here, even in a case where the ion exchange membrane of the present invention contains other polymers in addition to the fluorinated polymer (S), it is considered that ion clusters are formed by the association of ion exchange groups of the fluorinated polymer (S) and other polymers in the same manner as in the case where the ion exchange membrane is made of the fluorinated polymer (S).

The present inventors have found a problem that in the prior art, the membrane resistance becomes high and the voltage efficiency decreases. It is presumed that according to the present invention, by reducing the length of the ion channel represented by D - Dc to at most predetermined value, it was possible to reduce the membrane resistance, and as a result, it was possible to maintain excellent current efficiency, while suppressing a reduction in voltage efficiency.

In particular, the ion exchange membrane of the present invention is suitable for a redox flow battery wherein the current density during charging and discharging is high, in that the above-mentioned effects are more exhibited. Here, in the present specification, "the current density during charging and discharging is high" means that the current density during charging and discharging of the redox flow battery is at least 120 $mA/cm^2$ and usually, it is from 120 to 1,000 $mA/cm^2$.

Various models have been proposed for ion conduction models in ion exchange membranes containing a fluorinated ion exchange resin (an ion exchange resin having fluorine atoms). Among them, the ion cluster model proposed by Gierke et al. is widely known (cited document: GIERKE, T. D; MUNN, G. E; WILSON, FCd., The morphology in nafion perfluorinated membrane products, as determined by wide-and small-angle x-ray studies, Journal of Polymer Science Part B: Polymer Physics, 1981, 19.11: 1687-1704.).

In the above document, the following three formulae are described, and it is described that the ion cluster diameter Dc is obtained from these formulae.

$$\text{Formula (A)} \qquad \Delta V = \rho_p \Delta m / \rho_w$$

$$\text{Formula (B)} \quad Vc = [\Delta V/(1+\Delta V)]D^3 + NpVp$$

$$\text{Formula (C)} \quad Dc = (6Vc/\pi)^{1/3}$$

In the above formulae, $\Delta V$ is the volume change of a polymer, $\rho_p$ is the density of the polymer, $\rho_w$ is the density of water, $\Delta m$ is the water content of the polymer, Vc is the cluster volume, D is the distance between ion clusters, Np is the number of ion exchange sites in the cluster, and Vp is the volume of the ion exchange group portion.

In this specification, the diameter Dc of an ion cluster and the distance D - Dc of the ion cluster connecting portion are obtained by using the ion cluster model described in the above document.

In the document, there is a description that Vp in the above formula (B) is a term indicating the volume (thickness) portion of the ion exchange group portion, and its value is given by $68 \times 10^{-24}$ $cm^3$, and it matches 0.25 nm being the effective radius of the ion exchange group site. Since the ion cluster diameter Dc in the present specification does not include the effective radius of the ion exchange group portion, Vp is calculated as zero. That is, in the present specification, the above formula (B) is treated as $Vc = [\Delta V/(1+\Delta V)]D^3$.

Therefore, in the present specification, the diameter Dc of the ion cluster is calculated by the following formula (D).

$$\text{Formula (D)} \quad Dc = \{(\Delta V/(1+\Delta V)) \times D^3 \times (6/\pi)\}^{1/3}$$

As the distance D between the ion clusters to be used at the time of calculating the above diameter Dc, the value obtainable by the small-angle X-ray scattering method as described in the column for Examples given later, is used.

Further, the method of calculating $\Delta V$ will be described in detail in the column for Examples given later.

The distance D between the ion clusters measured by the small-angle X-ray scattering method is preferably at least 3.50 nm, more preferably at least 4.00 nm, further preferably at least 4.30 nm, from the viewpoint of the balance between current efficiency and voltage efficiency. Further, it is preferably at most 5.00 nm, more preferably at most 4.80 nm, further preferably at most 4.50 nm.

The difference (D - Dc) between the distance D between the ion clusters and the diameter Dc of the ion cluster is larger than 0 and at most 0.50 nm, and is preferably larger than 0 and at most 0.40 nm, more preferably larger than 0 and at most 0.30 nm, from the viewpoint of the balance between current efficiency and voltage efficiency.

The ion exchange membrane of the present invention can be produced by the method described later, but the value of (D - Dc) can be adjusted by the conditions for hydrolysis at the time of producing the ion exchange membrane or by the drying conditions of the membrane after the hydrolysis.

The ion exchange capacity of the fluorinated polymer (S) is preferably at least 0.95 milliequivalent/gram dry resin. When the ion exchange capacity of the fluorinated polymer (S) is at least 0.95 milliequivalent/gram dry resin, the voltage efficiency will be higher. Particularly, the ion exchange capacity of the fluorinated polymer (S) is preferably at least 1.00 milliequivalent/gram dry resin from such a viewpoint that the voltage efficiency will be more excellent.

Further, from the viewpoint of the balance between current efficiency and voltage efficiency, the ion exchange capacity of the fluorinated polymer (S) is preferably at most 2.05 milliequivalent/gram dry resin, more preferably at most 1.50 milliequivalent/gram dry resin, further preferably at most 1.30 milliequivalent/gram dry resin.

The membrane thickness of the ion exchange membrane is preferably at least 30 μm, more preferably at least 40 μm, from the viewpoint of maintaining a constant strength, and is preferably at most 100 μm, more preferably at most 80 μm, further preferably at most 60 μm, from the viewpoint of improving current efficiency and voltage efficiency.

As the fluorinated polymer (S) to be used for the ion exchange membrane, one type may be used alone, or two or more types may be used as laminated or mixed.

Further, the ion exchange membrane may contain a polymer other than the fluorinated polymer (S), but it is preferably substantially made of the fluorinated polymer (S). Substantially made of the fluorinated polymer (S) means that the content of the fluorinated polymer (S) is at least 90 mass% to the total mass of the polymers in the ion exchange membrane. The upper limit of the content of the fluorinated polymer (S) may be 100 mass% to the total mass of the polymer in the ion exchange membrane.

Specific examples of the polymer other than the fluorinated polymer (S) may be at least one type of polyazole compound selected from the group consisting of a polymer of a heterocyclic compound containing at least one nitrogen atom in the ring, and a polymer of a heterocyclic compound containing at least one nitrogen atom and an oxygen atom and/or a sulfur atom in the ring.

Specific examples of the polyazole compound may be a polyimidazole compound, a polybenzimidazole compound, a polybenzobisimidazole compound, a polybenzoxazole compound, a polyoxazole compound, a polythiazole compound, and a polybenzothiazole compound.

Further, from the viewpoint of the oxidation resistance of the ion exchange membrane and the control of the ion cluster diameter, other polymers may be a polyphenylene sulfide resin and a polyphenylene ether resin.
The fluorinated polymer (S) preferably contains units based on a fluorinated olefin and units based on a monomer having a sulfonic acid type functional group and a fluorine atom.
The fluorinated olefin may, for example, be a $C_{2-3}$ fluoroolefin having at least one fluorine atom in the molecule. Specific examples of the fluoroolefin may be tetrafluoroethylene (hereinafter referred to also as "TFE"), chlorotrifluoroethylene, vinylidene fluoride, vinyl fluoride and hexafluoropropylene. Among them, TFE is preferred, from such a viewpoint that it is excellent in the production cost of the monomer, the reactivity with other monomers, and the characteristics of the obtainable fluorinated polymer (S).
As the fluorinated olefin, one type may be used alone, or two or more types may be used in combination.
As the units based on the monomer having a sulfonic acid type functional group and a fluorine atom, units represented by the formula (1) are preferred.

Formula (1) $-[CF_2-CF(-L-(SO_3M)n)]-$

L is an n+1 valent perfluorohydrocarbon group which may contain an oxygen atom.
The oxygen atom may be located at the terminal of the perfluorohydrocarbon group or between carbon-carbon atoms.
The number of carbon atoms in the n+1-valent perfluorohydrocarbon group is preferably at least 1, more preferably at least 2, and is preferably at most 20, more preferably at most 10.
As L, an n+1-valent perfluoroaliphatic hydrocarbon group which may contain an oxygen atom is preferred, and a divalent perfluoroalkylene group which may contain an oxygen atom, which is an embodiment of n=1, or a trivalent perfluoroaliphatic hydrocarbon group which may contain an oxygen atom, which is an embodiment of n=2, is more preferred.
The above divalent perfluoroalkylene group may be either linear or branched.
M is a hydrogen atom, an alkali metal or a quaternary ammonium cation.
n is 1 or 2.
As the units represented by the formula (1), units represented by the formula (1-1), units represented by the formula (1-2), or units represented by the formula (1-3), are preferred.

Formula (1-1) $-[CF_2-CF(-O-R^{f1}-SO_3M)]-$

Formula (1-2) $-[CF_2-CF(-R^{f1}-SO_3M)]-$

Formula (1-3) 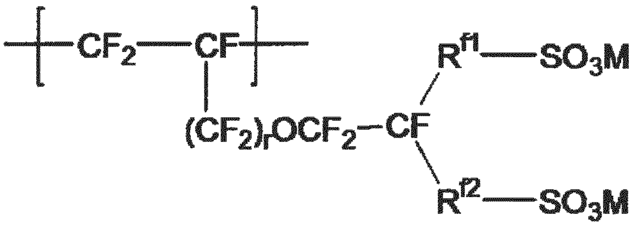

$R^{f1}$ is a perfluoroalkylene group which may contain an oxygen atom between carbon-carbon atoms. The number of carbon atoms in the perfluoroalkylene group is preferably at least 1, more preferably at least 2, and is preferably at most 20, more preferably at most 10.
$R^{f2}$ is a single bond or a perfluoroalkylene group that may contain an oxygen atom between carbon-carbon atoms. The number of carbon atoms in the perfluoroalkylene group is preferably at least 1, more preferably at least 2, and is preferably at most 20, more preferably at most 10.
r is 0 or 1.
M is a hydrogen atom, an alkali metal or a quaternary ammonium cation.
As the units represented by the formula (1), units represented by the formula (1-4) is more preferred.

Formula (1-4) $-[CF_2-CF(-(CF_2)_x-(OCF_2CFY)_y-O-(CF_2)_z-SO_3M)]-$

x is 0 or 1, y is an integer of from 0 to 2, z is an integer of from1 to 4, and Y is F or $CF_3$. M is as described above.
As specific examples of the units represented by the formula (1-1), the following units may be mentioned. In

the formulae, w is an integer of from 1 to 8, and x is an integer of from 1 to 5. The definition of M in the formulae is as described above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

As specific examples of the units represented by the formula (1-2), the following units may be mentioned. w in the formulae is an integer of from 1 to 8. The definition of M in the formulae is as described above.

$-[CF_2-CF(-(CF_2)_w-SO_3M)]-$

$-[CF_2-CF(-CF_2-O-(CF_2)_w-SO_3M)]-$

As the units represented by the formula (1-3), units represented by the formula (1-3-1) is preferred. The definition of M in the formula is as described above.

Formula (1-3-1) 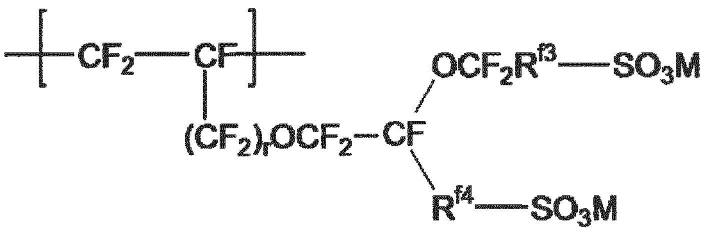

$R^{f3}$ is a $C_{1-6}$ linear perfluoroalkylene group, and $R^{f4}$ is a single bond or a $C_{1-6}$ linear perfluoroalkylene group which may contain an oxygen atom between carbon-carbon atoms. The definitions of r and M are as described above.

As specific examples of the units represented by the formula (1-3), the following may be mentioned.

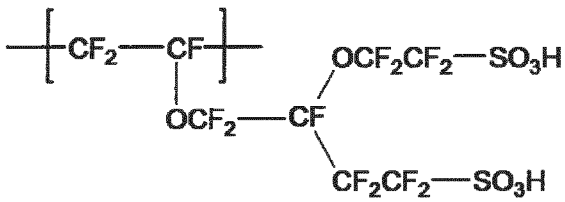

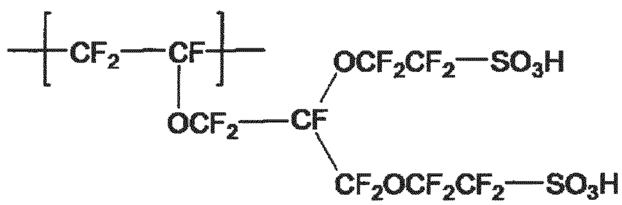

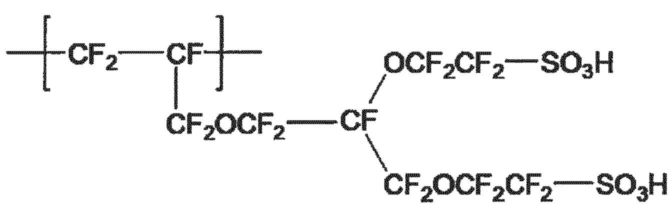

As the monomer having a sulfonic acid type functional group and a fluorine atom, one type may be used alone, or two or more types may be used in combination.

The fluorinated polymer (S) may contain units based on other monomers other than the units based on a fluorinated olefin and the units based on a monomer having a sulfonic acid type functional group and a fluorine atom.

As specific examples of other monomers, $CF_2=CFR^{f5}$ (where $R^{f5}$ is a C2-10 perfluoroalkyl group), $CF_2=CF-OR^{f6}$ (where $R^{f6}$ is a $C_{1-10}$ perfluoroalkyl group), and $CF_2=CFO(CF_2)_vCF=CF_2$ (where v is an integer of from 1 to 3) may be mentioned.

The content of units based on such other monomers is preferably at most 30 mass% to all units in the fluorinated polymer (S), from the viewpoint of maintaining the ion exchange performance.

The ion exchange membrane may have a single-layer structure or a multi-layer structure. In the case of a multi-layer structure, for example, a mode may be mentioned in which a plurality of layers containing a fluorinated polymer (S) and being different in ion exchange capacities or units, are laminated.

Further, the ion exchange membrane may contain a reinforcing material inside. That is, the ion exchange membrane may be in a mode of containing a fluorinated polymer (S) and a reinforcing material.

The reinforcing material preferably includes a reinforcing cloth (preferably a woven cloth). In addition to the reinforcing cloth, fibrils and porous bodies may be mentioned as reinforcing materials.

The reinforcing cloth is composed of a warp and a weft, and it is preferred that the warp and the weft are orthogonal to each other. The reinforcing cloth is preferably composed of a reinforcing thread and a sacrificial thread.

As the reinforcing thread, at least one type of reinforcing thread selected from the group consisting of a reinforcing thread made of polytetrafluoroethylene, a reinforcing thread made of polyphenylene sulfide, a reinforcing thread made of nylon, and a reinforcing thread made of polypropylene, is preferred.

The sacrificial thread may be a monofilament composed of one filament, or a multifilament composed of two or more filaments.

During handling such as at the time of producing the ion exchange membrane or at the time of mounting the ion exchange membrane on the battery, the strength of the ion exchange membrane is maintained by the sacrificial thread, but the sacrificial thread dissolves in the operating environment of the battery, whereby it is possible to reduce the resistance of the membrane.

Further, on the surface of the ion exchange membrane, an inorganic particle layer containing inorganic particles and a binder, may be disposed. The inorganic particle layer is preferably provided on at least one surface of the ion exchange membrane, and more preferably provided on both surfaces.

When the ion exchange membrane has an inorganic particle layer, the hydrophilicity of the ion exchange membrane is improved, and the ion conductivity is improved.

[Method for producing ion exchange membrane]

The ion exchange membrane of the present invention is preferably produced by producing a membrane of a fluorinated polymer having groups convertible to sulfonic acid type functional groups (hereinafter referred to also as a "precursor membrane"), and then, converting the groups convertible to sulfonic acid type functional groups in the precursor membrane to sulfonic acid type functional groups.

As the fluorinated polymer having groups convertible to sulfonic acid type functional groups, preferred is a copolymer (hereinafter referred to also as a "fluorinated polymer (S')") of a fluorinated olefin and a monomer having a group convertible to a sulfonic acid type functional group and a fluorine atom (hereinafter referred to also as a "fluorinated monomer (S')").

As the copolymerization method, a known method such as solution polymerization, suspension polymerization or emulsion polymerization may be adopted.

As the fluorinated olefin, those exemplified above may be mentioned, and TFE is preferred from such a viewpoint that it is excellent in the production cost of the monomer, the reactivity with other monomers, and the characteristics of the obtainable fluorinated polymer (S).

As the fluorinated olefin, one type may be used alone, or two or more types may be used in combination.

As the fluorinated monomer (S'), a compound may be mentioned which has at least one fluorine atom in the molecule, has an ethylenic double bond, and has a group convertible to a sulfonic acid type functional group.

As the fluorinated polymer (S'), a compound represented by the formula (2) is preferred from such a viewpoint that it is excellent in the production cost of the monomer, the reactivity with other monomers, and the characteristics of the obtainable fluorinated polymer (S).

Formula (2) $CF_2=CF-L-(A)n$

The definitions of L and n in the formula (2) are as described above.

A is a group convertible to a sulfonic acid type functional group. The group convertible to a sulfonic acid type functional group is preferably a functional group that can be converted to a sulfonic acid type functional group by

hydrolysis. Specific examples of the group convertible to a sulfonic acid type functional group may be $-SO_2F$, $-SO_2Cl$ and $-SO_2Br$.

As the compound represented by the formula (2), a compound represented by the formula (2-1), a compound represented by the formula (2-2), or the compound represented by the formula (2-3), is preferred.

Formula (2-1) $CF_2=CF-O-R^{f1}-A$

Formula (2-2) $CF_2=CF-R^{f1}-A$

Formula (2-3)

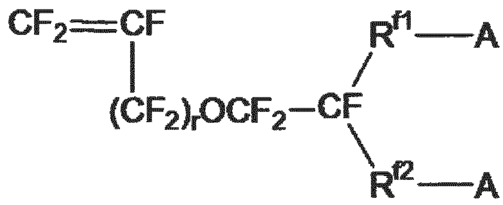

The definitions of $R^{f1}$, $R^{f2}$, r and A in the formulae are as described above.

As the compound represented by the formula (2), the compound represented by the formula (2-4) is more preferred.

Formula (2-4) $CF_2=CF-(CF_2)_x-(OCF_2CFY)_y-O-(CF_2)_z-SO_3M$

The definitions of M, x, y, z and Y in the formula are described above.

As specific examples of the compound represented by the formula (2-1), the following compounds may be mentioned. In the formulae, w is an integer of from 1 to 8, and x is an integer of from 1 to 5.

$CF_2=CF-O-(CF_2)_w-SO_2F$

$CF_2=CF-O-CF_2CF(CF_3)-O-(CF_2)_w-SO_2F$

$CF2=CF-[O-CF2CF\ (CF_3)]_x-SO2F$

As specific examples of the compound represented by the formula (2-2), the following compounds may be mentioned. w in the formulae is an integer of from 1 to 8.

$CF_2=CF-(CF_2)_w-SO_2F$

$CF_2=CF-CF_2-O-(CF_2)_w-SO_2F$

As the compound represented by the formula (2-3), a compound represented by the formula (2-3-1) is preferred.

Formula (2-3-1)

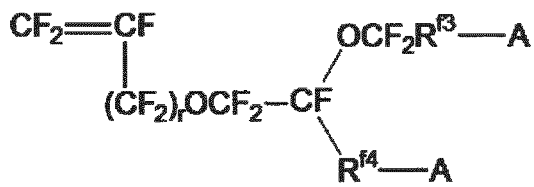

The definitions of $R^{f3}$, $R^{f4}$, r and A in the formula are as described above.

As specific examples of the compound represented by the formula (2-3-1), the following may be mentioned.

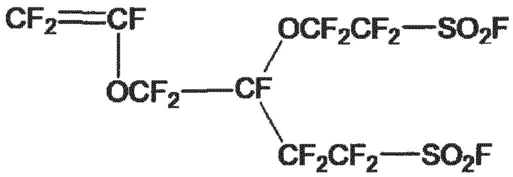

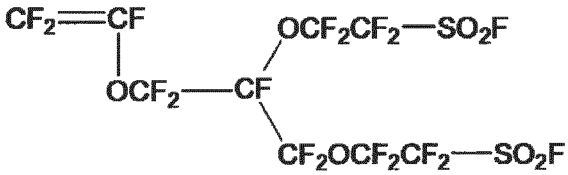

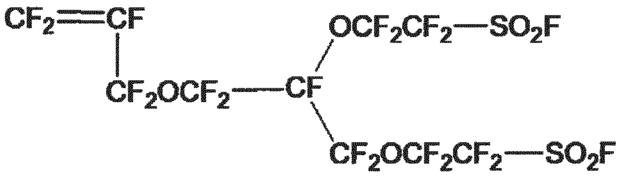

As the fluorinated monomer (S'), one type may be used alone, or two or more types may be used in combination.
For the production of the fluorinated polymer (S'), other monomers may further be used in addition to the fluorinated olefin and the fluorinated monomer (S'). As such other monomers, those exemplified above may be mentioned.
The ion exchange capacity of the fluorinated polymer (S) may be adjusted by changing the content of the units based on the fluorinated monomer (S') in the fluorinated polymer (S'). The content of the sulfonic acid type functional groups in the fluorinated polymer (S) is preferably the same as the content of the groups convertible to sulfonic acid type functional groups in the fluorinated polymer (S').
As a specific example of the method for producing the precursor membrane, an extrusion method may be mentioned.
Further, at the time of producing the ion exchange membrane of the above-mentioned multi-layered structure, a mode may be mentioned in which a plurality of layers made of a fluorinated polymer having groups convertible to sulfonic acid type functional groups are laminated by a coextrusion method.
A specific example of the method for converting groups convertible to sulfonic acid type functional groups in the precursor membrane to sulfonic acid type functional groups may be a method in which a precursor membrane is subjected to a treatment such as hydrolysis treatment or acidification treatment.
Specifically, a method of bringing the precursor membrane and the alkaline aqueous solution into contact with each other, is preferred.
A specific example of the method of bringing the precursor membrane and the alkaline aqueous solution into contact with each other, may be a method of immersing the precursor membrane in the alkaline aqueous solution, or a method of spray-coating the surface of the precursor membrane with the alkaline aqueous solution.
The temperature of the alkaline aqueous solution is preferably from 30 to 70°C, more preferably from 40 to 60°C, from the viewpoint of adjusting the size of the ion clusters (that is, the value of (D - Dc)).
The contact time of the precursor membrane and the alkaline aqueous solution is preferably at most 100 minutes, preferably from 3 to 80 minutes, more preferably from 20 to 60 minutes, from the viewpoint of adjusting the value of (D - Dc).
Here, the temperature of the alkaline aqueous solution may be higher than 70°C, but in that case, from the viewpoint of adjusting the value of (D - Dc), it is preferred to carry out a treatment for drying the obtained ion exchange membrane after the contact of the precursor membrane and the alkaline aqueous solution, as will be described later.
The alkaline aqueous solution preferably comprises an alkali metal hydroxide, a water-soluble organic solvent and water from the viewpoint of adjusting the value of (D - Dc).
A specific example of the alkali metal hydroxide may be sodium hydroxide or potassium hydroxide.
In the present specification, the water-soluble organic solvent is an organic solvent that is easily soluble in water, and specifically, an organic solvent of which the solubility is at least 0.1 g in 1,000 ml (20°C) of water, is preferred, and an organic solvent of which the solubility is at least 0.5 g is more preferred. The water-soluble organic solvent preferably contains at least one member selected from the group consisting of an aprotic organic solvent, an alcohol and an amino alcohol, and more preferably contains an aprotic organic solvent.
As the water-soluble organic solvent, one type may be used alone, or two or more types may be used in

combination.

As specific examples of the aprotic organic solvent, dimethyl sulfoxide, N,N-dimethylformamide, N,N-dimethylacetamide, N-methyl-2-pyrrolidone and N-ethyl-2-pyrrolidone may be mentioned, and dimethyl sulfoxide is preferred.

As specific examples of the alcohol, methanol, ethanol, isopropanol, butanol, methoxyethoxyethanol, butoxyethanol, butylcarbitol, hexyloxyethanol, octanol, 1-methoxy-2-propanol and ethylene glycol may be mentioned.

As specific examples of the amino alcohol, ethanolamine, N-methylethanolamine, N-ethylethanolamine, 1-amino-2-propanol, 1-amino-3-propanol, 2-aminoethoxyethanol, 2-aminothioethoxyethanol and 2-amino-2-methyl-1-propanol may be mentioned.

The concentration of the alkali metal hydroxide is preferably from 1 to 60 mass%, more preferably from 3 to 55 mass%, further preferably from 5 to 50 mass%, in the alkaline aqueous solution, from the viewpoint of adjusting the value of (D - Dc).

The content of the water-soluble organic solvent is preferably from 1 to 60 mass%, more preferably from 3 to 55 mass%, further preferably from 4 to 50 mass%, in the alkaline aqueous solution, from the viewpoint of adjusting the value of (D - Dc).

The concentration of water is preferably from 39 to 80 mass% in the alkaline aqueous solution from the viewpoint of adjusting the value of (D - Dc).

After the contact of the precursor membrane and the alkaline aqueous solution, a treatment for removing the alkaline aqueous solution may be conducted. The method for removing the alkaline aqueous solution may, for example, be a method of washing the precursor membrane contacted with the alkaline aqueous solution, with water.

After the contact of the precursor membrane and the alkaline aqueous solution, a treatment of drying the obtained ion exchange membrane may be conducted. From the viewpoint of adjusting the value of (D - Dc), a heat treatment is preferred as the drying treatment, and the heating temperature at that time is preferably from 50 to 160°C, more preferably from 80 to 120°C. The heating time is preferably from 6 to 24 hours.

Further, as the case requires, after the contact of the precursor membrane and the alkaline aqueous solution (or after the above-mentioned drying treatment), the obtained ion exchange membrane may be brought into contact with an acidic aqueous solution to change the sulfonic acid type functional groups to $-SO_3H$.

Specific examples of the acid in the acidic aqueous solution may be sulfuric acid and hydrochloric acid.

As described above, the ion exchange membrane may contain a reinforcing material.

At the time of producing an ion exchange membrane containing a reinforcing material, a precursor membrane containing a fluorinated polymer having groups convertible to sulfonic acid type functional groups and the reinforcing material, is used. As a method for producing a precursor membrane containing a fluorinated polymer having groups convertible to sulfonic acid type functional groups and the reinforcing material, a method may be mentioned in which a layer containing a fluorinated polymer having groups convertible to sulfonic acid type functional groups, and a layer containing a reinforcing material and a fluorinated polymer having groups convertible to sulfonic acid type functional groups, are arranged in this order, and these layers are laminated by using a laminating roll or a vacuum laminating device.

[Redox flow battery]

The redox flow battery (redox flow secondary battery) of the present invention has a cell having a positive electrode and a negative electrode and the above ion exchange membrane, and the ion exchange membrane is arranged in the above cell so as to separate the positive electrode and the negative electrode. The positive electrode cell chamber on the positive electrode side separated by the ion exchange membrane contains a positive electrode electrolyte solution containing an active material, and the negative electrode cell chamber on the negative electrode side separated by the ion exchange membrane contains a negative electrode electrolyte solution containing an active material.

In the case of a vanadium-type redox flow battery, charging and discharging of the battery are conducted by circulating in the positive electrode cell chamber a positive electrode electrolyte solution composed of a sulfate electrolytic solution containing vanadium tetravalent ($V^{4+}$) and vanadium pentavalent ($V^{5+}$), and in the negative electrode cell chamber a negative electrode electrolytic solution containing vanadium trivalent ($V^{3+}$) and vanadium divalent ($V^{2+}$). At that time, during charging, in the positive electrode cell chamber, $V^{4+}$ is oxidized to $V^{5+}$ because vanadium ions emit electrons, and in the negative electrode cell chamber, $V^{3+}$ is reduced to $V^{2+}$ by electrons returned through an outer path. In this redox reaction, the plus charge (positive charge) becomes excessive in the positive electrode cell chamber, while the plus charge (positive charge) becomes insufficient in the negative electrode cell chamber. The diaphragm selectively moves protons in the positive electrode cell chamber to the negative electrode chamber whereby electrical neutrality is maintained. At the time of discharging, the opposite reaction proceeds.

EXAMPLES

Hereinafter, the present invention will be described in detail with reference to Examples. However, the present

invention is not limited to these Examples. The blending amounts of the respective components in the Table given later indicate a mass standard.

[Membrane thickness of ion exchange membrane ]

The membrane thickness of an ion exchange membrane was obtained by drying the ion exchange membrane at 90°C for 2 hours, then observing the cross section of the ion exchange membrane by an optical microscope, and using an image analysis software.

[Ion exchange capacity of fluorinated polymer]

The mass of the fluorinated polymer (S) after being left at 90°C for 16 hours under a reduced pressure of at most 1/10 atm (76 mmHg) was measured and adopted as the mass of the dry resin of the fluorinated polymer (S). The dried fluorinated polymer (S) was immersed in a 2 mol/L sodium chloride aqueous solution at 60°C for 1 hour. After washing the fluorinated polymer (S) with ultrapure water, it was taken out, and the solution in which the fluorinated polymer (S) was immersed was titrated with a 0.1 mol/L sodium hydroxide aqueous solution, and the titrated value was divided by the mass of the dried resin used, to obtain the ion exchange capacity of the fluorinated polymer (S).

[Distance (D) between clusters]

An ion exchange membrane as an object to be measured was immersed in a 1 M sulfuric acid aqueous solution for 24 hours, then immersed in water at 25°C for 24 hours, and with respect to the obtained wet ion exchange membrane, the measurement was carried out by using an X-ray diffraction measuring device, whereby the angle indicating the peak of the obtained scattered light intensity was calculated.

As the measurement procedure for the small-angle X-ray scattering method, the wet ion exchange membrane was sealed in a thin film bag (preferably one without a peak in small-angle X-ray scattering light intensity) together with water and placed on a sample table. The measurement was carried out at room temperature, and the scattering profile was measured, for example, in a range of from about 0.1 to 5 ($nm^{-1}$) in the q range. Here, q is the absolute value of the scattering vector defined by $q = 4\pi/\lambda \times \sin(\theta/2)$, A is the wavelength of the incident X-ray, and $\theta$ is the scattering angle.

"Aichi Synchrotron BL8S3" was used for the small-angle X-ray scattering measurement, the wavelength of incident X-rays was 1.5 Å (8.2 keV), the beam size was about 850 $\mu$m × 280 $\mu$m, the camera length was 1,121 mm, and as the detector, R-AXIS IV (imaging plate) was used, and the exposure time was 60 sec. In the data processing, the obtained two-dimensional data was subjected to ring averaging processing to make it one-dimensional, and then background correction, transmittance correction, air scattering and empty cell correction, and sample thickness correction at the time of reading the imaging plate were carried out.

The peaks detected in the scattering profile obtainable by the above procedure indicate the presence of structural regularity in the ion exchange membrane. Generally, the peak position ($q_m$) to be detected in the range of q = 0.8 to 4 ($nm^{-1}$) is a factor indicating the interval between ion clusters.

With this peak position, the interval D between ion clusters was calculated from the following formula (E).

$$\text{Formula (E)} \quad D = 2\pi/q_m \text{ (nm)}$$

[Diameter (Dc) of ion cluster]

The mass (W1) of a wet state ion exchange membrane obtainable by immersing a 4 cm × 4 cm sample of an ion exchange membrane as an object to be measured in a 1 M sulfuric acid aqueous solution for 24 hours and then immersing it in water at 25°C for 24 hours and the mass (W2) of a dry state ion exchange membrane obtainable by leaving the wet ion exchange membrane at 90°C for 16 hours in a reduced pressure environment of at most 1/10 atm (76 mmHg) and drying it, were calculated. Using the obtained W1 and W2, the water content ratio ($\Delta$m) represented by the formula (F) was calculated.

$$\text{Formula (F)} \quad \Delta m = (W1-W2)/W2$$

Then, as described above, the diameter Dc of the ion cluster was calculated with reference to the ion cluster model proposed by Gierke et al. Specifically, the diameter Dc of the ion cluster was obtained by the following formula (D).

$$\text{Formula (D)} \quad Dc = \{(\Delta V/(1+\Delta V)) \times D^3 \times (6/\pi)\}^{1/3}$$

D in the formula (D) is a value (nm) to be calculated from the above formula (E), and $\Delta V$ was calculated by the formula (A).

$$\text{Formula (A)} \quad \Delta V = \rho_p \Delta m/\rho_w$$

Here, in the formula (A), $\Delta m$ is a value calculated as described above, $\rho_p$ is 2.1 (g/cm$^3$) as the density of the fluorinated polymer having sulfonic acid type functional groups, and $\rho_w$ is 1.0 (g/cm$^3$) as the density of water.

[Current efficiency, voltage efficiency, power efficiency]

A liquid-permeable carbon felt was installed on both sides of an ion exchange membrane obtained by the procedure as described later. Then, the ion exchange membrane having the carbon felt installed on both sides, was sandwiched between graphite electrodes, and a predetermined pressure was applied to obtain a laminate having the graphite electrode, the carbon felt, the ion exchange membrane, the carbon felt and the graphite electrode in this order. Further, the obtained laminate was disposed in a cell chamber frame made of PTFE, and the inside of the cell chamber frame was partitioned by the laminate to form a charging/discharging cell.

The cell chamber on one side was adopted as the positive electrode side, and the cell chamber on the opposite side was adopted as the negative electrode side, whereby a charging/discharging test was conducted while circulating on the positive electrode side a liquid composed of a sulfuric acid electrolytic solution containing vanadium tetravalent and vanadium pentavalent, and on the negative electrode side a liquid composed of a sulfuric acid electrolytic solution containing vanadium trivalent and vanadium divalent.

The current density for charging/discharging was set to be 200 mA/cm$^2$, and the total concentration of vanadium ions was set to be 1.6 mol/L on both the positive electrode side and the negative electrode side.

The current efficiency (%) was obtained by dividing the amount of electricity extracted during discharging by the amount of electricity required during charging. That is, it was obtained by the following formula.

$$\text{Current efficiency (\%)} = \{(\text{amount of electricity extracted during discharging})/(\text{amount of electricity required during charging})\} \times 100$$

The voltage efficiency (%) was obtained by dividing the average cell voltage during discharging by the average cell voltage during charging. That is, it was obtained by the following formula.

$$\text{Voltage efficiency (\%)} = \{(\text{average cell voltage during discharge})/(\text{average cell voltage during charging})\} \times 100$$

The power efficiency (%) corresponds to the product of the current efficiency and the voltage efficiency.

Here, the current efficiency being high means that the permeation of unnecessary vanadium ions in the ion exchange membrane is suppressed through charging and discharging.

Further, when the voltage efficiency is high, the resistance of the charging/discharging cell (the total of ion exchange membrane resistance, solution resistance, contact resistance and other resistance) is small.

When the power efficiency is high, the energy loss during charging and discharging is small.

[Example 1]

A polymer S1 obtained by polymerizing TFE and a monomer represented by the following formula (X) was supplied to a melt extruder for production of pellets to obtain pellets of the polymer S1.

$CF_2$=CF-O-$CF_2$CF($CF_3$)-O-$CF_2CF_2$-$SO_2$F ... (X)

Then, the pellets of the polymer S1 were supplied to a melt extruder for production of a film and were formed

into a film by an extrusion method to produce a precursor membrane made of the polymer S1.

The obtained precursor membrane was brought into contact with an alkaline aqueous solution of 5.5 mass% of dimethyl sulfoxide and 30 mass% of potassium hydroxide, heated to 55°C, with the outer periphery of the membrane sealed with PTFE packing. The treatment was carried out for 60 minutes.

After the above treatment, the obtained film was washed with water to obtain an ion exchange membrane of Example 1.

[Examples 2 and 3, and Comparative Examples 1 to 3]

An ion exchange membrane was obtained in accordance with the same procedure as in Example 1 except that, as shown in Table 1, the ion exchange capacity after hydrolysis, the thickness of the ion exchange membrane, the composition/temperature of the alkaline aqueous solution, and the contact time with the alkaline aqueous solution were adjusted.

The ion exchange capacity was adjusted by adjusting the ratio of TFE to the monomer represented by the formula (X) at the time of polymerization, and the thickness of the membrane was adjusted by adjusting the amount of the resin to be supplied to the extruder, to the values shown in Table 1.

With respect to the obtained ion exchange membrane, the current efficiency, voltage efficiency and power efficiency were measured by the above-mentioned methods. The results are shown in Table 1.

In Table 1, the "AR" column represents the ion exchange capacity (milliequivalent/gram dry resin) of the fluorinated polymer in the ion exchange membrane.

The "thickness (μm)" column represents the thickness of the ion exchange membrane.

"D" represents the distance D between ion clusters calculated by the method as described above.

"Dc" represents the diameter Dc of the ion cluster calculated by the method as described above.

"D - Dc" represents the difference between D and Dc.

[Table 1]

| Table 1 | AR | Thickness (μm) | Conditions for hydrolysis | | | D (nm) | Dc (nm) | D-Dc (nm) | Evaluations | | |
|---|---|---|---|---|---|---|---|---|---|---|---|
| | | | DMSO (mass%) /KOH (mass%) | Temperature (°C) | Time (min) | | | | Current efficiency (%) | Voltage efficiency (%) | Power efficiency (%) |
| Example 1 | 1.25 | 50 | 5.5/30 | 55 | 60 | 4.44 | 4.26 | 0.18 | 95.1 | 80.5 | 76.6 |
| Example 2 | 1.25 | 50 | 5.5/30 | 40 | 120 | 4.33 | 4.05 | 0.28 | 95.6 | 80.0 | 76.5 |
| Example 3 | 1.1 | 50 | 5.5/30 | 55 | 60 | 4.25 | 3.82 | 0.43 | 96.4 | 75.0 | 72.3 |
| Example 4 | 1.0 | 50 | 10/30 | 95 | 60 | 4.34 | 3.89 | 0.45 | 96.6 | 74.5 | 72.0 |
| Comparative Example 1 | 1.0 | 50 | 5.5/30 | 95 | 60 | 4.55 | 4.03 | 0.52 | 97.1 | 72.0 | 69.9 |
| Comparative Example 2 | 1.0 | 50 | 40/10 | 55 | 60 | 4.20 | 3.65 | 0.55 | 97.3 | 71.7 | 69.8 |

As shown in Table 1, in the redox flow battery using the ion exchange membrane of the present invention, the current efficiency was excellent, the decrease in voltage efficiency was suppressed, and, as a result, the power efficiency was also excellent.

REFERENCE SYMBOLS

10: Ion cluster
12: Ion channel

The entire disclosure of Japanese Patent Application No. 2018-197566 filed on October 19, 2018 including specification, claims, drawings and summary is incorporated herein by reference in its entirety.

## Claims

1. An ion exchange membrane containing a fluorinated polymer having sulfonic acid type functional groups, **characterized in that** the difference (D - Dc) between the distance D between ion clusters measured by the small-angle X-ray scattering method and the diameter Dc of an ion cluster, is larger than 0 and at most 0.50 nm.

2. The ion exchange membrane according to Claim 1, wherein D - Dc is larger than 0 and at most 0.40 nm.

3. The ion exchange membrane according to Claim 1 or 2, wherein the membrane thickness of the ion exchange membrane is from 30 to 100 μm.

4. The ion exchange membrane according to any one of Claims 1 to 3, wherein the fluorinated polymer contains units based on a fluorinated olefin and units based on a monomer having a sulfonic acid type functional group and a fluorine atom.

5. The ion exchange membrane according to Claim 4, wherein the fluorinated olefin is a $C_{2-3}$ fluoroolefin having at least one fluorine atom in the molecule.

6. The ion exchange membrane according to Claim 4, wherein the units based on the monomer having a sulfonic acid type functional group and a fluorine atom are units represented by the formula (1):

   Formula (1) $-[CF_2-CF(-L-(SO_3M)n)]-$

   wherein L is an n+1-valent perfluorohydrocarbon group which may contain an oxygen atom, M is a hydrogen atom, an alkali metal or a quaternary ammonium cation, and n is 1 or 2.

7. The ion exchange membrane according to Claim 6, wherein the units represented by the formula (1) are units represented by the formula (1-4):

   Formula (1-4) $-[CF_2-CF(-(CF_2)_x-(OCF_2CFY)_y-O-(CF_2)_z-SO_3M)]-$

   wherein M is a hydrogen atom, an alkali metal or a quaternary ammonium cation, x is 0 or 1, y is an integer of from 0 to 2, z is an integer of from 1 to 4, and Y is F or $CF_3$.

8. The ion exchange membrane according to any one of Claims 1 to 7, which further contains a reinforcing material.

9. The ion exchange membrane according to any one of Claims 1 to 8, which is used for a redox flow battery.

10. The ion exchange membrane according to any one of Claims 1 to 9, wherein the ion exchange capacity of the fluorinated polymer is at least 0.95 milliequivalent/gram dry resin.

11. The ion exchange membrane according to any one of Claims 1 to 10, which is used for a redox flow battery, of which the current density is at least 120 $mA/cm^2$ during charging/discharging.

12. A redox flow battery comprising a positive electrode, a negative electrode, an electrolytic solution, and an ion exchange membrane as defined in any one of Claims 1 to 11.

Fig. 1

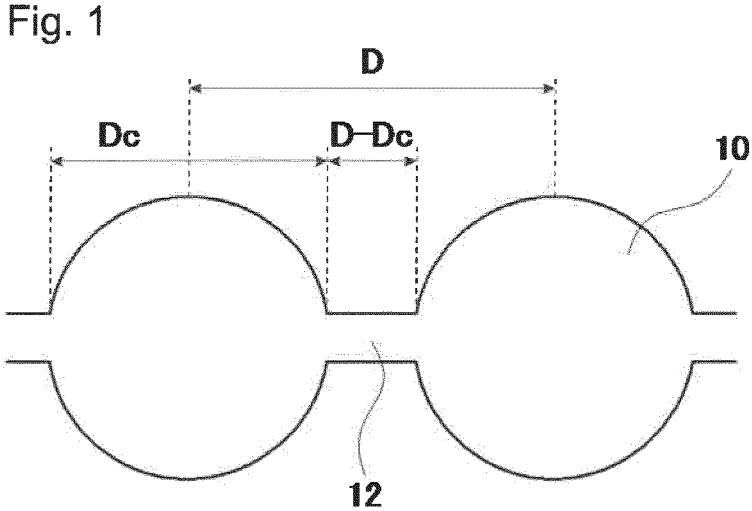

## INTERNATIONAL SEARCH REPORT

International application No.
PCT/JP2019/040724

A. CLASSIFICATION OF SUBJECT MATTER
C08J 5/22(2006.01)i; C08L 27/12(2006.01)i; C25B 13/08(2006.01)i; H01B 1/06(2006.01)i; H01M 8/1023(2016.01)i; H01M 8/1039(2016.01)i; H01M 8/1067(2016.01)i; H01M 8/18(2006.01)i
FI: C08J5/22 101; C08J5/22 CEW; H01M8/1039; H01M8/18; H01M8/1067; H01B1/06 A; C08L27/12; H01M8/1023; C25B13/08 302
According to International Patent Classification (IPC) or to both national classification and IPC

B. FIELDS SEARCHED
Minimum documentation searched (classification system followed by classification symbols)
C08J5/00-5/02, C08J5/12-5/22, C08K3/00-13/08, C08L1/00-101/14, C25B1/00-9/20, C25B13/00-15/08, H01B1/02-1/24, H01M8/00-8/0297, H01M8/08-8/2495

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-163858 A (ASAHI KASEI CHEMICALS CORP.) 22.08.2013 (2013-08-22) paragraph [0077] | 1, 3-8, 10 |
| X<br>Y | JP 2015-158017 A (ASAHI KASEI CHEMICALS CORP.) 03.09.2015 (2015-09-03) claims, paragraphs [0002], [0025], [0106]-[0110], [0114] | 1-8, 10<br>9, 11-12 |
| Y | WO 2013/100079 A1 (ASAHI KASEI E-MATERIALS CORP.) 04.07.2013 (2013-07-04) claims, paragraphs [0059]-[0060], [0097] | 9, 11-12 |
| A | JP 2005-294171 A (TOYOTA MOTOR CORP.) 20.10.2005 (2005-10-20) paragraph [0005] | 1-12 |
| A | WO 2018/047925 A1 (ASAHI KASEI CORPORATION) 15.03.2018 (2018-03-15) claims | 1-12 |
| A | JP 5474762 B2 (ASAHI KASEI E-MATERIALS CORP.) 16.04.2014 (2014-04-16) claims | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 January 2020 (06.01.2020) | 21 January 2020 (21.01.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/040724

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-323084 A (ASAHI KASEI CORPORATION) 20.11.2001 (2001-11-20) claims | 1-12 |
| P, A | WO 2019/088298 A1 (AGC INC.) 09.05.2019 (2019-05-09) claims | 1-12 |

Form PCT/ISA/210 (continuation of second sheet) (January 2015)

**INTERNATIONAL SEARCH REPORT**
Information on patent family members

International application No.
PCT/JP2019/040724

| Patent Documents referred in the Report | Publication Date | Patent Family | Publication Date |
|---|---|---|---|
| JP 2013-163858 A | 22 Aug. 2013 | CN 103243344 A | |
| JP 2015-158017 A | 03 Sep. 2015 | (Family: none) | |
| WO 2013/100079 A1 | 04 Jul. 2013 | US 2014/0377687 A1 claims, paragraphs [0121]-[0124], [0175]-[0179]<br>EP 2800191 A1<br>CN 104115322 A<br>KR 10-2014-0098189 A | |
| JP 2005-294171 A | 20 Oct. 2005 | (Family: none) | |
| WO 2018/047925 A1 | 15 Mar. 2018 | EP 3511947 A1 claims<br>KR 10-2019-0004796 A<br>CN 109690695 A | |
| JP 5474762 B2 | 16 Apr. 2014 | US 2011/0020728 A1 claims<br>WO 2009/116446 A1<br>EP 2270818 A1<br>CN 101971270 A | |
| JP 2001-323084 A | 20 Nov. 2001 | (Family: none) | |
| WO 2019/088298 A1 | 09 May 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015097219 A
- JP 2018197566 A


### Non-patent literature cited in the description


- **GIERKE, T. D ; MUNN, G. E ; WILSON, FCD.** The morphology in nafion perfluorinated membrane products, as determined by wide-and small-angle x-ray studies. *Journal of Polymer Science Part B: Polymer Physics,* 1981, vol. 19.11, 1687-1704